# EUROPEAN PATENT SPECIFICATION

(11) **EP 1 164 905 B1**
(45) Date of publication and mention of the grant of the patent: **14.05.2008**
(21) Application number: 00919453.1
(22) Date of filing: 16.03.2000
(51) Int. Cl.: A47J 43/25, B23D 73/12

(54) **IMPROVED GRATER AND METHOD OF MAKING A GRATING DEVICE**
REIBE UND DEREN HERSTELLUNGSVERFAHREN
RAPE AMELIOREE ET PROCEDE DE PRODUCTION D'UN DISPOSITIF DE RAPAGE

(30) Priority: 26.03.1999 US 277343; 13.01.2000 US 483720
(43) Date of publication of application: 02.01.2002
(73) Proprietor: CHEF'N CORPORATION, Seattle, Washington 98121 (US)
(72) Inventor: HOLCOMB, David, A., Seattle, WA 98177 (US); Settele, Ignaz, 86920 Epfach (DE)
(74) Representative: Grünecker, Kinkeldey, Stockmair & Schwanhäusser Anwaltssozietät
(86) International application number: PCT/US2000/007100
(87) International publication number: WO 2000/057762

(56) References cited:
- DE-C- 596 405
- GB-A- 104 123
- GB-A- 488 925
- GB-A- 1 463 031
- US-A- 2 804 896
- US-A- 3 581 790
- US-A- 4 185 486

## Description

The invention relates to a piece of cheese or chocolate, in which a slug of cheese or chocolate can be rubbed across the grater for shaving the cheese or chocolate into fine flakes and a method of making a grater for grating pieces of cheese and chocolate.

Prior art grating devices use various different types of perforations for apertures in the grating device for grating the food. US A-3,581,790 shows a grating surface In which the grating members are formed by piercing the surface of the plate to create raised points sticking out substantiate a considerable distance from the plate.

US 861359 A refers to a nutmeg grater. The grater comprises a plate having opposite sides and a plurality of apertures in the plate. Each aperture has a sharp raised edge extending outwardly from the side of the plate and terminating in an outer planar shaving end around substantially the entire perimeter of the aperture. The outer planar shaving end provides a shaving edge grating the food. The internal side wall terminates into the shaving end.

U S-A-2,804,898 shows a grating surface In which the apertures are formed by piercing or pushing out the metal to create sharp cutting edges.

US-A-3,589,421 shows circumferentially spaced spikes molded into the grating surface around the apertures.

Other grating devices form cupped-shaped apertures In the surface of the grater or use flat surface without any sharp edges at all.

DE-A-596,405 discloses a grating device wherein the holes are located on protrusions.

US-A-4,185,486 discloses a piercing tool for forming bossed holes.

While all of these prior art grating devices will grate or comminute food products, none seems to do it in a manner which nicely shaves the food and does it with a minimum of effort needed by the person who is pushing the food across the grating device.

It is an object of this invention to provide a grater which provides a nice shaving action to produce a flake like shaving but with a minimal amount of effort needed to move a slug or block of cheese or chocolate, across the grating surface.

The object is achieved by a grater for a piece of cheese or chocolate according to claim 1 and a method of making a grater for grating pieces of cheese and chocolate according to claim 13.

The grater of this invention is made from a plate having apertures with sharp raised edges around the perimeter of the apertures and an important feature of the invention is that the raised edges are sharp but extend out from the surface of the plate only less than 0.508mm (twenty thousands of an inch). The apertures can be holes in the plate with raised edges or inserted in holes in the plates.
Figure 1 shows a grater with a handle and embodying the principles of the invention.
Figure 2 is a side elevation of the grater shown in Figure 1.
Figure 3A is an enlarged fragmentary detail of one of the apertures of the grater shown in Figure 1.
Figure 3B is a plan view of the detail shown in Figure 3A.
Figure 4A is another embodiment of a grater showing the principles of the invention.
Figure 4B is an enlarged fragmentary detail of one of the apertures formed in a manner similar to Figure 3A but with a raised edge on only one side.
Figure 5A is still another embodiment showing the principles of the invention.
Figure 5B is an enlarged fragmenting detail of one of the apertures formed in a manner similar to Figure 3A but with a raised edge on only one side.
Figures 6, 7, and 8 the show method steps of one method involved in forming the desired sharp edge around the perimeter of the apertures of the grating plate.
Figure 9 shows the method steps of another method of forming the desired sharp edges around the perimeter of the apertures on one side only in a soft metal like aluminum.
Figures 10A and 10B show an example with square apertures, which is not part of the invention but is helpful for understanding the invention.
Figures 10C and 10D show a method of making the apertures of Figures 10A and 10B.
Figure 11 shows a unique cutting tool for forming the raised edge around the hole in a material like stainless steel.
Figure 12 is a bottom end view of the tool of Figure 11.
Figure 13 is a plan view of another embodiment of the invention.
Figure 14 is a section taken along the line 14-14 of Figure 13.
Figure 15 is a fragmentary top plan view taken in the direction
of the arrows 15 - 15 in Figure 14.
Figure 16 is a longitudinal section of a grater, which is not part of the invention.
Figure 17 is a fragmentary detail taken at the reference number 17 in Figure 16.
Figure 18 is a bottom view of the grater shown in Figure 16.

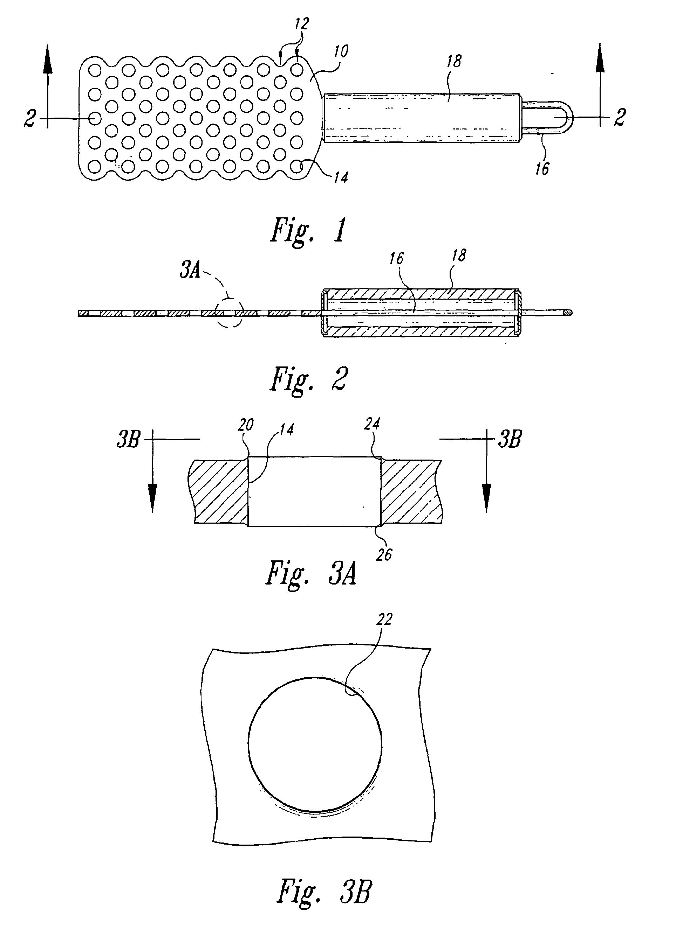

Figure 1 shows a plate 10 having a plurality of rows 12 of apertures 14. The rows 12 are staggered so that the apertures are offset from one another between adjacent rows. The plate 10 is preferably made from stainless steel and is approximately about 3,175mm (1/8 inch) or less thick. The precise dimensions, of course, can be varied depending upon the type of material and manufacturing techniques.

The plate 10 has an extension 16 to which is rigidly attached a handle 18.

It is a unique feature of this invention that each of the apertures 14 is provided with a sharp raised edge 20 around the entire perimeter 22 of each opposite ends 24 and 26 of holes in the plate. If desired, the sharp raised edges can be provided only on one side of the plate if the plate is used at all times only by rubbing the food across that one side. Advantageously if the sharp raised edges are on both of the opposite ends 24 and 26 of the apertures then the plate can be turned over and used on either side at the convenience of the user.

It is also one of the unique features of this invention that the sharp raised edges of the apertures are not simply pierced or molded protrusions or spikes as in the prior art but are formed in a manner that extends the sharp raised edges from the side surface of the plate only a very small amount no greater than about 0,508 mm (twenty thousands of an inch) [0.020 inches]. In one embodiment, the sharp raised edges preferably extend out only 0,254 mm (ten thousands of an inch) [0.010 inches]. This sharpness. of the edge but only slight extension out from the surface of the plate provides a shaving action on the food being rubbed across the surface comminuting the food into small flakes as opposed to slices or larger crumpled pieces of food as in other types of graters.

The sharp raised edges go around the entire perimeter of the ends of the apertures.

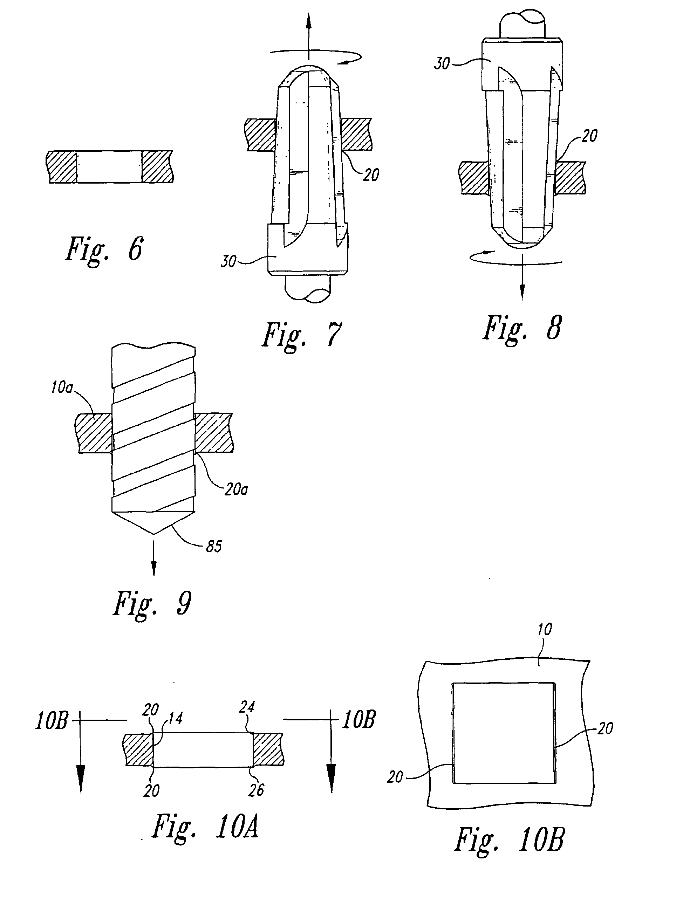

The sharp raised edges are uniquely formed in stainless steel metal by a process, which includes first making holes in the plate as shown in Figure 6. If the raised sharp edges are wanted on opposite ends of the holes then after the holes are made a tapered metal tool or member 30 is pushed into and rotated in the hole from a first direction to form the raised edge as shown in Figure 7 and then the tool 30 is pushed back through the hole in the opposite direction as shown in Figure 8.

The tool 30 has circumferentially spaced elongated cutting edges 31 that when pressed against the edge of the end of the hole and rotated forms the sharp raised edge 20.

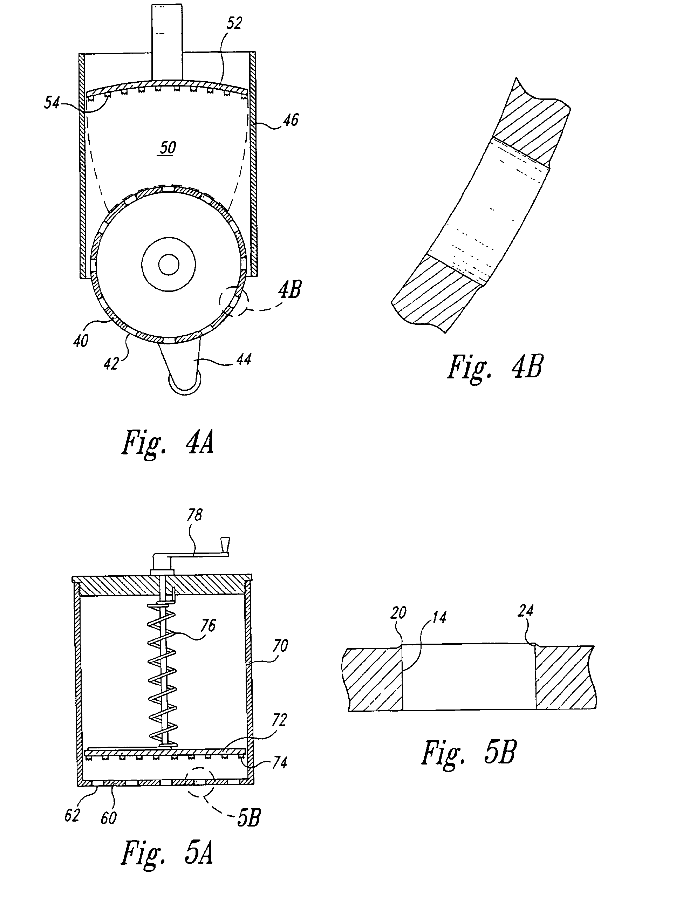

The unique grating plate of this invention can also be manufactured in* curved form as shown in Figure 4A. In Figure 4A a curved plate 40 is provided with apertures 42 with the apertures being formed with sharp raised edges in the same manner as in the embodiments of Figures 1-3 and Figures 6-8 but only on one side. A raised edge is needed only on one side of the plate in this embodiment. The curved plate can be rotated by a handle 44 and a hopper unit 46 placed above the curved plate to support a block of food such as the slug of cheese 50. A pusher 52 having protrusions 54 can be used to push the cheese against the rotating curved grating plate 40 as is well known.

Figures 5A and 5B show another embodiment in which the plate is in the form of a disc 60 again being provided with apertures 62 having sharp raised edges of the type shown in Figure 3A but only on one side. In the plate 60 and in the plate 40 the sharp raised edges will be provided only on the upper surface of the plates as this is the only surface that can be contacted by the soft food. Thus, it is unnecessary to have sharp raised edges on opposite ends of the apertures in the plate if only one side of the plate is to be used.

Figure 5A also shows a conventional cylindrical body 70 with a rotating plate 72 having protrusions 74 for gripping the cheese. The spring 76 holds the plate down while a handle 78 is used for rotating the plate and the rotating the cheese over the grating plate 60.

The embodiments of Figures 4 and 5 are provided to illustrate that the grating plate of this invention with its sharp raised edges around the perimeter of the apertures can be used for any type of grating surface, either static (that is, being held still) or movable and either powered manually or by motor.

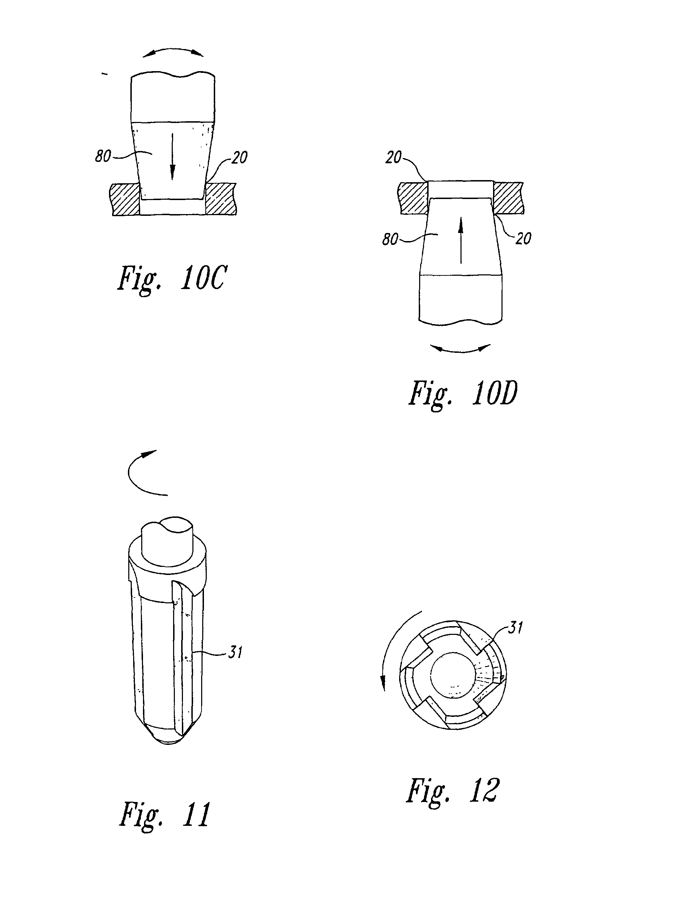

The apertures can be square, triangular, oval, and rectangular or any non-circular shapes so long as the sharp edges of this invention can be made on the ends of the apertures. Figures 10A and 10B, show an example which is helpful for the understanding of the invention that uses a square hole and with the sharp raised edges only on opposite opposed edges in the direction of rubbing of the food across the plate. The sharp raised edges for a square or rectangular hole can be formed by pushing a tapered member 80 into the hole and rocking it back and forth, with the tapered member being tapered only on two opposite opposed sides and not tapered on the other two opposed sides as shown in Figures 10C and 10D.

Figure 9 shows an embodiment of a plate - 10a made from a softer metal like aluminum. In this embodiment the sharp raised edges are made by pressing a rotating drill bit 85 through holes of smaller diameter in the plate 10a with enough pressure to push the metal into the sharp raised edges 20a around the perimeter of the aperatures on one side only. The larger drill bit is about 0,381-0,508 mm (.015 to .020 inches) larger in diameter than the diameter of the original apertures.

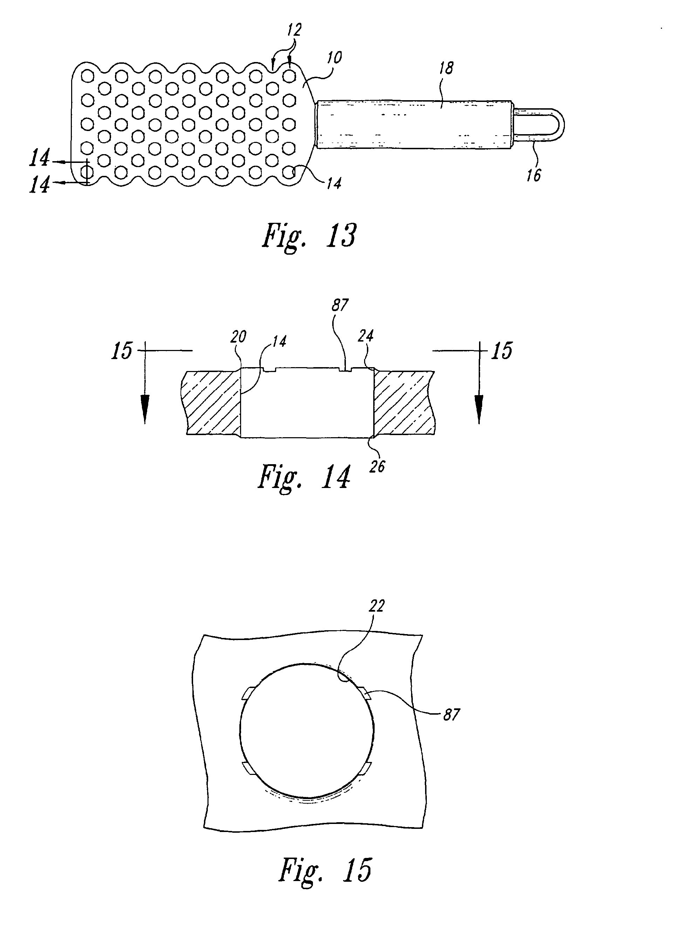

Figure 13 shows an embodiment like Figure 1 but with the sharp raised edges notched as at 87. In this embodiment the flakes that are formed when grating are cut or shredded into smaller ribbons.

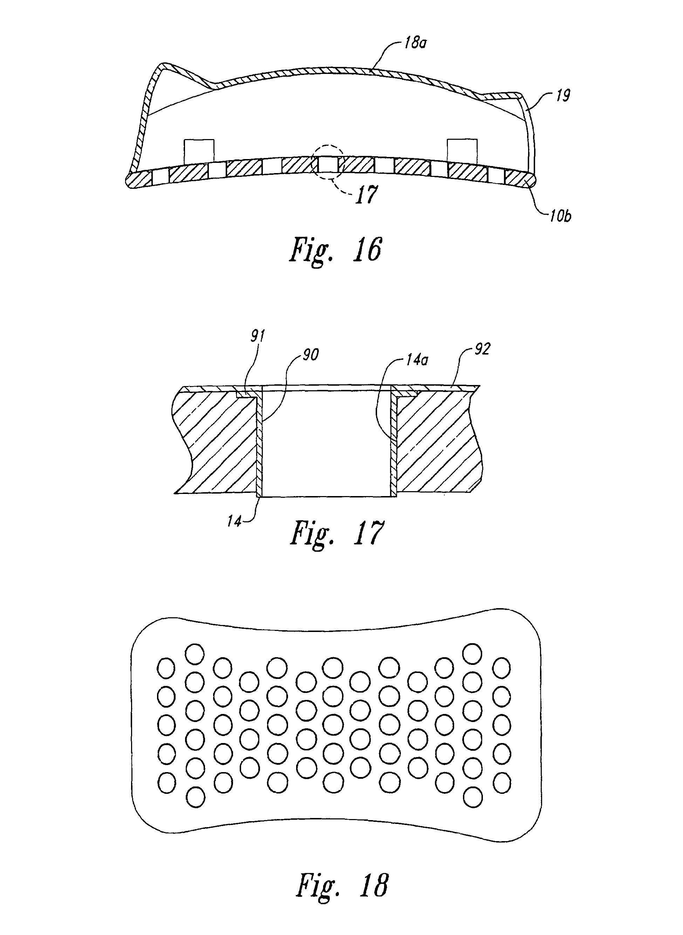

Figures 16-18 show another grater which is not part of the invention in which the plate 10b is curved and made from plastic. The plate is mounted on a housing or handle 18a that can fit into the palm of the user's hand. The housing is hollow and has an open end 19 for the discharge of the comminuted food product. In this grater the apertures 14 are made by press-fitting metal, such as, stainless steel, inserts or rivets 90 into holes 14a. The rivets could also be made of other hard materials, such as, hard plastic. The rivets have an enlarged head 91 that rests against the inside surface of the plate 10b and are sealed into the holes by a second layer of plastic 92. The lower ends of the rivets extend outwardly beyond the lower surface of the plate by the same amount as for the other embodiments, namely, about no greater than 0,508 mm (.020 inches) and preferably 0,0254 mm (.001 inches). The inserts or rivets can be made with conventional rivet manufacturing techniques.

While specific embodiments of the invention have been illustrated and described, it should be apparent to one of ordinary skill in this art that the invention is not to be limited to the specific embodiments illustrated in the drawings. The embodiments have been described as made from metal, such as aluminum or stainless steel, preferably stainless steel;

## Claims

1. A grater for a piece of cheese or chocolate, comprising:
a plate having opposite sides,
a plurality of apertures (14) in the plate and each aperture having a perimeter (22),
each aperture having a sharp raised edge (20) extending outwardly from the side of the plate and terminating in an outer planar shaving end around the entire perimeter of the aperture, the aperture having an internal sidewall lying substantially perpendicular to the outer planar shaving end,
the outer planar shaving end providing a shaving edge for grating the food,
the internal sidewall terminating into the shaving end and the outer planar shaving end extending no more than 0.508 mm (0.020 inches) out from the side of the plate.

2. The grater of claim 1, each aperture having a second opposite end (26) with a perimeter, and an identical raised edge formed on each of the second opposite ends.

3. The grater of claim 1, said plate (10) being flat, and including a handle (18) attached to the plate for a person supporting the plate on an angle in use.

4. The grater of claim 1, said plate (10) being curved around a center of curvature, and including means (78) for rotating the plate about its center of curvature.

5. The grater of claim 1, said plate being flat and circular, and including means (78) for moving the food around the circular plate.

6. The grater of claim 1, said apertures including inserts (90) fitted into holes in the plate and the ends of the inserts extending outward beyond the side of the plate to form the outer planar shaving end.

7. The grater of claim 1, the plate being slightly curved, a hollow housing (18a) attached to and supporting the plate, the housing having an opening (19) for discharge of grated food product.

8. The grater of claim 6, the outer planar shaving end of the raised edges extending out from the plate no more than 0.254 mm (0.010 inches).

9. The grater of claim 1, the outer planar shaving end of the raised edged going completely around the entire perimeter of the aperture.

10. The grater of claim 1, said apertures being square:

11. The grater of claim 1, the outer planar shaving ends extending out from the side of the plate no more than 0.254 mm (0.010 inches).

12. A method of making a grater for grating pieces of cheese and chocolate comprising:
forming a plurality of staggered rows of apertures (14), each aperture having a perimeter, in a plate having opposite sides, pushing a member larger than the aperture in a first direction into each aperture to form a raised edge having an outer planar shaving end around the entire perimeter of the raised edge of the aperture, the aperture having an internal sidewall lying substantially perpendicular to the outer planar shaving end,
the internal sidewall terminating into the shaving end and the outer planar shaving end extending out from the side of the plate no more than 0.508 mm (0.020 inches), to be adapted to shaving the cheese or chocolate when rubbed across the shaving end of the apertures in the plate.

13. The method of claim 12, the plate being a flat plate, and further including forming an outer planar shaving end on the opposite side of the plate by pushing a tapered member into each aperture from a second direction opposite to said first direction to form said raised edges with said outer planar shaving ends on both sides of the plate.

14. The method of claim 11, said tapered member having side cutouts along its length.

15. The method of claim 13, the tapered member being tapered on two opposed sides.

16. The method of claim 12, the apertures being non-circular.

17. The method of claim 16, the non-circular apertures each being a square.

18. The method of claim 12, the member being a drill bit.

19. The method of claim 13, said cutouts being elongated cutting edges, said step of pushing the tapered member into the apertures including rotating the tapered member in the apertures.

## Patentansprüche

1. Reibe für ein Käse- oder Schokoladenstück, die umfasst:
eine Platte mit einander gegenüberliegenden Seiten,
eine Vielzahl von Öffnungen (14) in der Platte, wobei jede Öffnung einen Umfang (22) hat,
jede Öffnung eine scharfe, erhabene Kante (20) hat, die sich von der Seite der Platte nach außen erstreckt und in einem äußeren planen, schabenden Ende um den gesamten Umfang der Öffnung herum endet, wobei die Öffnung eine innere Seitenwand aufweist, die im Wesentlichen senkrecht zu dem äußeren planen, schabenden Ende liegt,
das äußere plane, schabende Ende eine schabende Kante zum Reiben des Lebensmittels bildet,
die innere Seitenwand in dem schabenden Ende endet und sich das äußere plane, schabende Ende um nicht mehr als 0,508 mm (0,020 Inch) von der Seite der Platte nach außen erstreckt.

2. Reibe nach Anspruch 1, wobei jede Öffnung ein zweites gegenüberliegendes Ende (26) mit einem Umfang und einen identischen erhabenen Rand aufweist, der an jedem der zweiten gegenüberliegenden Enden ausgebildet ist.

3. Reibe nach Anspruch 1, wobei die Platte (10) flach ist und einen Griff (18) enthält, der an der Platte für eine Person angebracht ist, die die Platte bei Benutzung in einem Winkel trägt.

4. Reibe nach Anspruch 1, wobei die Platte (10) um einen Krümmungsmittelpunkt herum gekrümmt ist und eine Einrichtung (78) zum Drehen der Platte um ihren Krümmungsmittelpunkt herum enthält.

5. Reibe nach Anspruch 1, wobei die Platte flach und kreisförmig ist und eine Einrichtung (78) zum Bewegen von Lebensmitteln um die kreisförmige Platte herum enthält.

6. Reibe nach Anspruch 1, wobei die Öffnungen Einsätze (90) enthalten, die in Löcher in der Platte eingepasst sind, und sich die Enden der Einsätze nach außen über die Seite der Platte hinaus erstrecken, um das äußere plane, schabende Ende zu bilden.

7. Reibe nach Anspruch 1, wobei die Platte leicht gekrümmt ist, ein hohles Gehäuse (18a) an der Platte angebracht ist und sie trägt und das Gehäuse eine Öffnung (19) zum Ausgeben von geriebenem Lebensmittelerzeugnis aufweist.

8. Reibe nach Anspruch 6, wobei das äußere plane, schabende Ende der erhabenen Ränder sich von der Platte um nicht mehr als 0,254 mm 0,010 (Inch) nach außen erstreckt.

9. Reibe nach Anspruch 1, wobei das äußere plane, schabende Ende des erhabenen Randes vollständig um den gesamten Umfang der Öffnung herum verläuft.

10. Reibe nach Anspruch 1, wobei die Öffnungen quadratisch sind.

11. Reibe nach Anspruch 1, wobei sich die äußeren planen Enden von der Seite der Platte um nicht mehr als 0,254 mm (0,010 Inch) nach außen erstrecken.

12. Verfahren zum Herstellen einer Reibe zum Reiben von Käse- und Schokoladenstücken, das umfasst:
Ausbilden einer Vielzahl versetzter Reihen von Öffnungen (14) in einer Platte mit einander gegenüberliegenden Seiten, wobei jede Öffnung einen Umfang hat, Drücken eines Elementes, das größer ist als die Öffnung, in einer ersten Richtung in jede Öffnung hinein, um einen erhabenen Rand auszubilden, der ein äußeres planes, schabendes Ende um den gesamten Umfang des erhabenen Randes der Öffnung herum aufweist, wobei die Öffnung eine innere Seitenwand aufweist, die im Wesentlichen senkrecht zu dem äußeren planen, schabenden Ende liegt,
die innere Seitenwand in dem schabenden Ende endet und sich das äußere plane, schabende Ende um nicht mehr als 0,508 mm (0,020 Inch) von der Seite der Platte nach außen erstreckt, so dass es so eingerichtet ist, dass es den Käse oder die Schokolade schabt, wenn diese/r über das schabende Ende der Öffnungen in der Platte gerieben wird.

13. Verfahren nach Anspruch 12, wobei die Platte eine flache Platte ist, und das des Weiteren Ausbilden eines äußeren planen, schabenden Endes an der gegenüberliegenden Seite der Platte einschließt, indem ein konisches Element aus einer zweiten Richtung entgegengesetzt zu der ersten Richtung in jede Öffnung gedrückt wird, um die erhabenen Ränder mit den äußeren planen, schabenden Enden an beiden Seiten der Platte auszubilden.

14. Verfahren nach Anspruch 12, wobei das konische Element seitliche Ausschnitte in seiner Längsrichtung hat.

15. Verfahren nach Anspruch 13, wobei das konische Element an zwei einander gegenüberliegenden Seiten konisch ist.

16. Verfahren nach Anspruch 12, wobei die Öffnungen nicht kreisförmig sind.

17. Verfahren nach Anspruch 16, wobei die nicht kreisförmigen Öffnungen jeweils ein Quadrat sind.

18. Verfahren nach Anspruch 12, wobei das Element ein Bohrer ist.

19. Verfahren nach Anspruch 13, wobei die Ausschnitte längliche Schneidkanten sind und der Schritt des Drückens des konischen Elementes in die Öffnungen hinein Drehen des konischen Elementes in den Öffnungen einschließt.

## Revendications

1. Râpe pour un morceau de fromage ou de chocolat, comprenant :
une plaque ayant des côtés opposés,
une pluralité d'ouvertures (14) dans la plaque et chaque ouverture ayant un périmètre (22),
chaque ouverture ayant un bord relevé tranchant (20) s'étendant vers l'extérieur depuis le côté de la plaque et se terminant dans une extrémité de râpage plane externe autour du périmètre entier de l'ouverture, l'ouverture ayant une paroi latérale interne se trouvant essentiellement perpendiculairement à l'extrémité de râpage plane externe,
l'extrémité de râpage plane externe fournissant un bord de râpage pour râper l'aliment,
la paroi latérale interne se terminant dans l'extrémité de râpage et l'extrémité de râpage plane externe s'étendant à une distance ne dépassant pas 0,508 mm (0,020 pouce) vers l'extérieur depuis le côté de la plaque.

2. Râpe selon la revendication 1, chaque ouverture ayant une seconde extrémité opposée (26) avec un périmètre et un bord relevé identique formé sur chacune des secondes extrémités opposées.

3. Râpe selon la revendication 1, ladite plaque (10) étant plate, et comprenant une poignée (18) reliée à la plaque pour une personne supportant la plaque sur un angle lors de son utilisation.

4. Râpe selon la revendication 1, ladite plaque (10) étant courbée autour d'un centre de courbure, et comprenant des moyens (78) pour faire tourner la plaque autour de son centre de courbure.

5. Râpe selon la revendication 1, ladite plaque étant plate et circulaire, et comprenant des moyens (78) pour déplacer l'aliment autour de la plaque circulaire.

6. Râpe selon la revendication 1, lesdites ouvertures comprenant des inserts (90) ajustés dans des orifices dans la plaque et les extrémités des inserts s'étendant vers l'extérieur au-delà du côté de la plaque pour former l'extrémité de râpage plane externe.

7. Râpe selon la revendication 1, la plaque étant légèrement courbée, un logement creux (18a) relié à et supportant la plaque, le logement ayant une ouverture (19) pour la sortie du produit alimentaire râpé.

8. Râpe selon la revendication 6, l'extrémité de râpage plane externe des bords relevés s'étendant vers l'extérieur depuis la plaque à une distance ne dépassant pas 0,254 mm (0,010 pouce).

9. Râpe selon la revendication 1, l'extrémité de râpage plane externe du bord relevé allant entièrement autour du périmètre entier de l'ouverture.

10. Râpe selon la revendication 1, lesdites ouvertures étant carrées.

11. Râpe selon la revendication 1, les extrémités de râpage planes externes s'étendant vers l'extérieur depuis le côté de la plaque à une distance ne dépassant pas 0,254 mm (0,010 pouce).

12. Procédé de fabrication d'une râpe pour râper des morceaux de fromage et de chocolat comprenant :
la formation d'une pluralité de rangées d'ouvertures (14) en quinconce, chaque ouverture ayant un périmètre, dans une plaque ayant des côtés opposés, la poussée d'un élément plus grand que l'ouverture dans une première direction dans chaque ouverture pour former un bord relevé ayant une extrémité de râpage plane externe autour du périmètre entier du bord relevé de l'ouverture, l'ouverture ayant une paroi latérale interne se trouvant essentiellement perpendiculairement à l'extrémité de râpage plane externe,
la paroi latérale interne se terminant dans l'extrémité de râpage et l'extrémité de râpage plane externe s'étendant vers l'extérieur depuis le côté de la plaque à une distance ne dépassant pas 0,508 mm (0,020 pouce) pour être adaptée à râper le fromage ou chocolat lorsqu'il est frotté en travers de l'extrémité de râpage des ouvertures dans la plaque.

13. Procédé selon la revendication 12, la plaque étant une plaque plate, et comprenant en outre la formation d'une extrémité de râpage plane externe sur le côté opposé de la plaque en poussant un élément conique dans chaque ouverture depuis une seconde direction opposée à ladite première direction pour former lesdits bords relevés avec lesdites extrémités de râpage planes externes des deux côtés de la plaque.

14. Procédé selon la revendication 1?, ledit élément conique ayant des découpes latérales le long de sa longueur.

15. Procédé selon la revendication 13, l'élément conique étant conique de deux côtés opposés.

16. Procédé selon la revendication 12, les ouvertures étant non circulaires.

17. Procédé selon la revendication 16, les ouvertures non circulaires étant chacune un carré.

18. Procédé selon la revendication 12, l'élément étant une mèche.

19. Procédé selon la revendication 13, lesdites découpes étant des bords de découpe allongés, ladite étape de poussée de l'élément conique dans les ouvertures comprenant la rotation de l'élément conique dans les ouvertures.
